(19) Europäisches Patentamt
European Patent Office
Office européen des brevets

(11) Publication number: **0 493 987 A1**

# (12) EUROPEAN PATENT APPLICATION

(21) Application number: **91312108.3**

(51) Int. Cl.[5]: **C02F 1/72**, C02F 1/54

(22) Date of filing: **31.12.91**

(30) Priority: **04.01.91 US 638482**

(43) Date of publication of application:
**08.07.92 Bulletin 92/28**

(84) Designated Contracting States:
**AT BE DE ES FR GB IT NL**

(71) Applicant: **BETZ EUROPE, INC.**
**Somerton Road**
**Trevose, PA 19053-6783(US)**

(72) Inventor: **Devore, David Ira**
**112 Alberts Way**
**Langhorne, Pennsylvania 19047(US)**

(74) Representative: **W.P. Thompson & Co.**
**Coopers Building, Church Street**
**Liverpool L1 3AB(GB)**

## (54) Clarification of water.

(57) A method and composition for clarifying and reducing colour contamination in water is disclosed. The method and composition comprises adding to the water a combination of a cationic poly electrolyte, a ferrous salt and hydrogen peroxide.

EP 0 493 987 A1

The present invention relates to a composition and method directed to the removal of pollutants from water systems. More particularly it relates to a combination of a cationic polyelectrolyte, a ferrous salt and hydrogen peroxide in synergistic amounts for clarifying and reducing colour contamination in water systems for potable and industrial uses.

Rivers, streams and lakes often contain suspended solids such as silt, clays and naturally occurring organic substances, such as humic substances, as well as synthetic organic chemical pollutants. These suspended solids often will remain suspended in the water even upon long, quiescent standing thereof.

For this reason, it is often necessary to treat water obtained from natural sources to remove the suspended solids so the water can be used for municipal drinking purposes and industrial applications. Often, large amounts of inorganic coagulating chemicals such as alum, sodium aluminate and lime are employed in the clarification of municipal drinking water. Also, long periods of settling time are often necessary before clarification is achieved.

Another treatment involves chlorination of the influent water to remove contaminants and make it suitable for potable uses. However, chlorination is problematic in that chlorine reacts with the colour contaminants and is thought to form members of the carcinogenic trihalomethane genus, such as chloroform. As such, chlorination is disfavourably viewed as a safe means to clarify water.

Colour in raw water is mostly colloidal in nature and results from organic material such as humic acids, lignins, tannins, fulvic acids, and other related compounds that are leached from leaves or other vegetation.

Colour in raw water causes various problems including objectionable taste, increased bacteria and algae growth, fouling of anion exchange resins, interference with coagulation and stabilization of soluble iron and manganese.

US- Re. - 28 807 (Panzer et al.) discloses cross-linked polyquaternary ammonium polymers as flocculants for aqueous dispersions.

US-A- 3 288 770 (Butler) discloses polydiallyldimethyl ammonium chloride (DADMAC) and the process for preparing this polymer.

US-A- 4 668 403 (Walterick, Jr. et al.) and US-A-4 668 404 (Walterick, Jr.) disclose the use of poly DADMAC and an epichlorohydrin-amine polymer. These are used in conjunction with powdered activated carbon in reducing colour contamination of influent water. Those patents are directed to water that is already potable.

US-A- 4 661 259 (Walterick, Jr. et al.) discloses the use of poly DADMAC and an epichlorohydrin-amine polymer. They are used with a third polymer and powdered activated carbon to remove trihalomethane compounds and precursors from influent water.

US-A- 4 765 923 (Walterick, Jr.) discloses the use of poly DADMAC and an epichlorohydrin-amine polymer. Used in conjunction with a third polymer and powdered activated carbon, this carbon is directed to reducing colour contamination of potable influent water.

The use of cationic polymers for wastewater treatment is known in the art. As cited in "Polyelectrolytes for Water and Wastewater Treatment" chapters 6 and 7 (W.L.K. Schwoyer, CRC Press, 1981) it is generally believed that in settling and flocculation, there is a relationship between molecular weight and effectiveness, with the higher molecular weight polymers of a given type being the most effective.

US-A- 4 699 951 (Allenson, et al) discloses a combination of two cationic polymers with vastly different molecular weights for treating water contaminated with oily waste and dispersed solids. A polymer admixture is applied to the wastewater.

Other patents of interest include US-A- 3 336 269 (Monagle et al.) and US-A- 3 336 270 (Monagle). These disclosures pertain, inter alia, to preparatory routes for acrylamide type water soluble polymers in general and detail the preparation of acrylamide/vinyl quaternary ammonium salt copolymers, such as betamethacryloyloxyethyltrimethyl ammonium methyl sulphate/acrylamide copolymers. Another patent related to the general field of flocculation is US-A-3 278 506 (Chamot et al.).

The use of the hydrogen peroxide-ozone (Peroxone) advanced oxidation process is discussed in Ferguson, D.W. "Comparing Peroxone and Ozone for Controlling Taste and Odour Compounds, Disinfection By-products and Microorganisms". Journal of the American Water Works Association, Vol. 82, No 4 (April 1990), pp. 181-191. That article describes the results of pilot-scale testing designed to optimize the hydrogen peroxide to ozone ratio and to compare ozone and peroxone at different contact times in water systems.

It has now been found that a combination of a cationic polyelectrolyte, ferrous salt and hydrogen peroxide produces water of greater clarity and with reduced colour contamination. This combination is suitable for the production of potable water from naturally occurring raw water.

According to the present invention there is provided a composition for clarifying and reducing colour contamination in an aqueous system which comprises a (a) cationic polyelectrolyte, (b) ferrous salt and (c)

hydrogen peroxide.

In accordance with one embodiment of the present invention, the composition is applicable to clarifying and reducing colour contamination in an aqueous system suffering from suspended solids and organic contaminants.

In accordance with another embodiment of the present invention, the composition is applicable to clarifying and reducing colour contamination in an aqueous system suffering from the growth of microorganisms.

The present invention relates to a composition for clarifying and reducing colour contamination in water for potable and industrial use. More specifically, the present invention is directed towards a composition and method comprising a cationic polyelectrolyte, a ferrous salt and hydrogen peroxide. The composition is particularly suited to the production of potable water from sources which contain significant quantities of naturally occurring organic substances such as humic acids, as well as synthetic organic chemical pollutants.

It has now been found possible to produce potable water from naturally occurring, raw water. It has been found possible to produce water of greater clarity. It has further been found possible to produce water with reduced colour contamination.

Importantly it has been found possible to clarify water without using chlorine, but to use cationic polyelectrolytes that are EPA potably approved.

The cationic polymers that are used in the invention include polymers which are available commercially, including those designated here as Polymers A, B, & C.

Polymer A is an example of a crosslinked melamine formaldehyde and is one preferably having a molecular weight of about 25,000. This polymer generally has the structure:

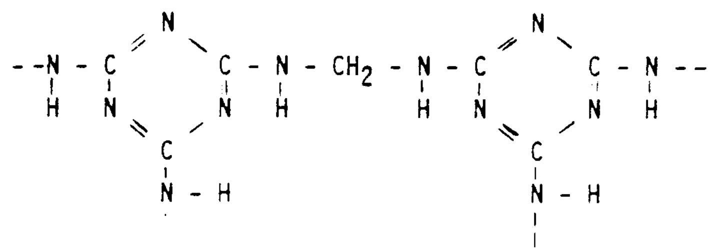

This polymer can be prepared by chain reaction polymerization.

Polymer B is an example of a condensation product of dimethylamine and epichlorohydrin and is one preferably having a molecular weight of about 8000 to about 14,000. This polymer generally has the structure:

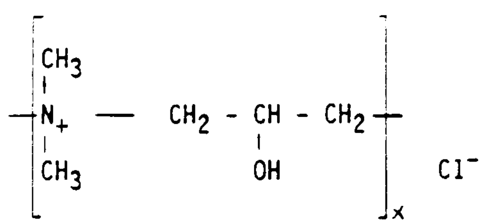

This molecule may be prepared in accordance with the disclosure of US- Re. 28 807 (Panzer et al.).

Polymer C is an example of a polydiallyldimethyl ammonium chloride (poly DADMAC) polymer and preferably is one having a molecular weight of about 250 to about 400 x $10^3$. This polymer generally has the structure:

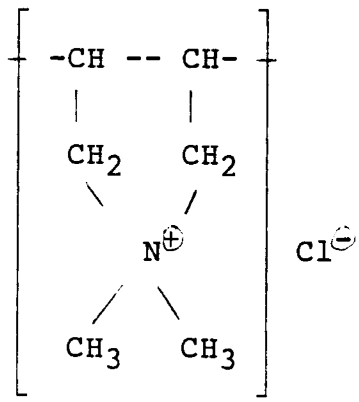

This molecule may be prepared in accordance with the disclosure of US-A- 3 288 770 (Butler).

Cationic polyelectrolytes typically possess secondary, tertiary and/or quaternary amine groups. In solution, protonated or quaternary amines impart a cationic charge to the polymer. The cationic charge is critical to the adsorption and flocculation properties of these polyelectrolytes.

The importance to the present invention of these polymers is that they are effective in combination with the ferrous salt and hydrogen peroxide at clarifying water and reducing colour contamination while being within established EPA potability limits. Whilst other cationic polyelectrolytes than those particularly described hereinabove may be effective with the other constituents of the present invention they may not be suitable for municipal drinking water purposes as they are not EPA potably approved.

Epichlorohydrin-amine, poly DADMAC and melamine-formaldehyde polyelectrolytes similar to the polymers described hereinabove may also be effective treatment agents.

A combination of ferrous sulphate and hydrogen peroxide is known in the prior art as Fenton's reagent. The concentrations that proved effective in the present invention for these two chemicals were within the EPA potable limits for water treatment.

The amounts of the treatment components to be fed to the system will vary in accordance with factors such as: amount of colour contamination present in the water, amount of suspended solids in the water, water pH and temperature. However, the relative concentrations of the three components are critical to the performance of the invention.

There is an optimum range of dosages for each of the components for which the invention is most effective. For instance the relative concentrations of $FeSO_4$ to $H_2O_2$ are approximately 1 to 1 on a mass basis, or approximately 0.2 to 1 on a molar basis for optimal performance. An increase in $H_2O_2$ concentration above this ratio resulted in poorer performance. This is an indication of the free radical chemistry involved with $FeSO_4$ and $H_2O_2$.

Treatment dosages range from 5 to 50 ppm active for the polymers, 10 to 80 ppm for the ferrous sulphate and 10 to 50 ppm for the hydrogen peroxide. However, other ferrous salts such as, for example, $FeCl_2$ capable of dissociation to ferrous ions in aqueous solutions may be utilized. An optimum treatment consists of 8 ppm of Polymer B, 40 ppm $FeSO_4 \cdot 7H_2O$ and 20 ppm $H_2O_2$; all dosages are in ppm "active".

It is also recognized that the present invention can treat waters infested with biological microorganisms such as, for example, bacteria, viruses, algae and giardia lamblia for which turbidity is an indirect measure. The present invention will serve to improve situations where subsequent disinfection processes like ozonation or chlorination are to occur.

The following Examples are presented to illustrate the present invention and are not to be construed as limiting the invention.

EXPERIMENTAL

In order to demonstrate the efficacy of the invention at clarifying water and reducing color contamination, turbidity and color reduction tests were undertaken with well water from Palm Beach, Florida. The procedure used was a basic jar test in which the beakers were mixed simultaneously by a gang stirrer. Colour determinations were made using a Hach Spectrophotometer.

Jar Test Procedures

1. 500 ml of well water added to 600 ml beaker;
2. Each filled beaker mixed at 100 RPM using a stirrer;
3. Treatment added at dosages indicated in Tables;
4. Mix 2 minutes, then slow speed of stirrer to 35 RPM and mix an additional 5 minutes;
5. After 5 minutes is over, turn stirrer off and remove stirrer from beaker;
6. Allow floc to settle for 5 minutes;
7. Take sample of supernatant using a 30 ml syringe and measure the turbidity.

Filtration prior to analysis of organic contaminants, to remove flocculated turbidity, was achieved using a 0.45 micron MSI Magna nylon filter.

A Mitsubishi total organic analyzer Model TOX-10 was used to analyze total organic halogens. Selected supernatants were chlorinated by NaOCl at 25 ppm and allowed to stand in the dark for 4 days.

TABLE 1

Supernatant, 0.45 micron filtered
Raw Well Water, Palm Beach, Florida

| Treatment Dosage (ppm) Polymer B | $FeSO_4$* | $H_2O_2$ | Turbidity(NTU) | Colour (CU) | TOX(ppb) |
|---|---|---|---|---|---|
| 0 | 0 | 0 | 0.24 +/- 0.03 | 33+/-5 | 449;737 |
| 0 | 40 | 0 | 4.4 | 83 | |
| 0 | 0 | 20 | 0.27 | 34 | |
| 0 | 10 | 10 | 0.29 | 25 | |
| 0 | 10 | 20 | 0.26 | 28 | |
| 0 | 10 | 50 | 0.22 | 29 | |
| 0 | 40 | 20 | 0.49 | 21 | |
| 0 | 50 | 10 | 0.16 | 16 | |
| 0 | 50 | 50 | 0.21 | 16 | |
| 8 | 0 | 0 | 0.20 | 15 | |
| 10 | 0 | 0 | 1.33 | 28 | |
| 5 | 10 | 10 | 0.22 | 17 | |
| 5 | 20 | 0 | 0.18 | 24 | |
| 5 | 0 | 10 | 0.20 | 14 | |
| 5 | 20 | 10 | 0.17 | 8 | 145 |
| 5 | 40 | 20 | 0.13 | 10 | 20 |
| 10 | 10 | 10 | 0.36; 0.14 | 23; 15 | |
| 10 | 20 | 0 | 4.3 | 55 | |
| 10 | 20 | 10 | 0.15 | 11 | 954 |
| 10 | 20 | 20 | 0.11; 0.11 | 8;20 | |
| 10 | 40 | 20 | 0.45; 0.12 | 10;6 | |
| 10 | 50 | 10 | 0.19 | 7 | |
| 10 | 50 | 50 | 0.28 | 17 | |
| 10 | 80 | 40 | 0.16 | 7 | |
| 15 | 10 | 10 | 4.1 | 103 | |
| 15 | 20 | 50 | 0.31 | 37 | |
| 20 | 10 | 10 | 1.4; 0.64 | 83; 57 | |
| 20 | 20 | 20 | 2.3 | 111 | |
| 20 | 40 | 20 | 3.1 | 179 | |

* Expressed as $FeSO_4 \cdot 7H_2O$

Table 1 represents the results when using Polymer B in the composition of the present invention. Lower values for turbidity and colour reflect better performance. When used alone, hydrogen peroxide had little effect on turbidity and colour. Ferrous sulphate actually elevated turbidity and colour values, Also combinations of $FeSO_4$ and $H_2O_2$ without polyelectrolyte polymer B were significantly less effective than with Polymer B.

TABLE 2

Supernatant, 0.45 micron filtered
Raw Well Water, Palm Beach, Florida

| Treatment Dosage (ppm) Polymer A | $FeSO_4$* | $H_2O_2$ | Turbidity Unfiltered (NTU) | Turbidity Filtered (NTU) | Colour Unfiltered (CU) | Colour Filtered |
|---|---|---|---|---|---|---|
| 10 | | | 1.9 | 0.27 | 54 | 14 |
| 15 | | | 2.0 | 0.13 | 54 | 13 |
| 20 | | | 2.5 | 0.25 | 58 | 11 |
| 50 | | | 1.3 | 0.14 | 26 | 5 |
| 100 | | | 0.7 | 0.07 | 10 | 0 |
| 10 | | | | 0.20 | | 20 |
| 10 | 10 | 10 | | 0.20 | | 20 |
| 50 | 10 | 10 | | 0.10 | | 5 |
| 20 | | | | 0.18 | | 15 |
| 5 | 40 | 20 | | 0.15 | | 12 |
| 10 | 40 | 20 | | 0.21 | | 11 |
| 20 | 40 | 20 | | 0.17 | | 11 |
| 50 | 40 | 20 | | 0.14 | | 11 |

* Expressed as $FeSO_4 \cdot 7H_2O$

Table 2 represents the results when using Polymer A in a composition of the present invention.

TABLE 3

Supernatant, 0.45 micron filtered
Raw Well Water, Palm Beach, Florida

| (Treatment Dosage in ppm) Polymer A | $FeSO_4$* | $H_2O_2$ | Lime | Polymer D | Turbidity Filtered (NTU) | Colour Filtered (CU) |
|---|---|---|---|---|---|---|
| 20 | 40 | 20 | 2000 | | 0.17 | 15 |
| 75 | | | 2000 | | 0.35 | 8 |
| 75 | | | 2000 | 1 | 0.25 | 11 |
| 75 | | | | | 0.18 | 5 |
| 75 | | | 2000 | | 2.6 | 23 |
| 75 | | | | 200 | 0.18 | 5 |

Polymer D = anionic polyacrylamide
* Expressed as $FeSO_4 \cdot 7H_2O$

Lime was used in this test as the plant used it to maintain the target pH of 9.5. The addition of lime had serious deleterious effect on the performance of the polymers.

TABLE 4

Supernatant, 0.45 micron filtered
Raw Well Water, Palm Beach, Florida

| (Treatment Dosage in ppm) Polymer A | $FeSO_4$* | $H_2O_2$ | PVP | Turbidity Filtered (NTU) | Colour Filtered (CU) |
|---|---|---|---|---|---|
| 75 | | | | 1.21 | 9 |
| 75 | 40 | 20 | 5 | 0.30 | 5 |
| 75 | | | | 5.0 | 28 |
| 75 | 4 | 2 | 5 | 0.33 | 7 |
| 75 | | | 5 | 1.0 | 11 |
| 75 | 40 | 20 | | 0.31 | 5 |

PVP = Polyvinyl Pyrrolidone
* Expressed as $FeSO_4 \cdot 7H_2O$

Table 4 represents the results when another polymer is used with a composition of the present invention.

TABLE 5

Supernatant, 0.45 micron filtered
Raw Well Water, Palm Beach, Florida

| (Treatment Dosage in ppm) Polymer A | Lime | Polymer D | DK1036M | Polymer B | Turbidity Filtered (NTU) | Colour Filtered (CU) |
|---|---|---|---|---|---|---|
| 75 | 2000 | 1 | | | 0.6 | 12 |
| 75 | | | | 2 | 0.25 | 8 |
| 75 | 2000 | 1 | 200 | | 0.20 | 6 |
| 75 | 2000 | 1 | | | 0.21 | 10 |
| 75 | | | | 2 | 0.17 | 6 |

DK1036M = 25% Hydrodarko B in a clay-carboxymethylcellulose dispersion
Polymer D = Anionic Polyacrylamide

Table 5 represents the results when lime is added along with various polymers.

TABLE 6

Supernatant, 0.45 micron filtered
Raw Well Water, Palm Beach, Florida

| (Treatment Dosage in ppm) Polymer A | $FeSO_4$* | $H_2O_2$ | Polymer B | Turbidity Filtered (NTU) | Colour Filtered (CU) |
|---|---|---|---|---|---|
| 70 | 4 | 2 | 2 | 0.14 | 7 |
| 50 | 40 | 20 | | 0.10 | 5 |
| 50 | | | | 0.56 | 17 |

* Expressed as $FeSO_4 \cdot 7H_2O$

Table 6 represents a composition of the present invention tested with another preferred polymer.

TABLE 7

Supernatant, 0.45 micron filtered
Raw Well Water, Palm Beach, Florida

(Treatment Dosage in ppm)

| Polymer A | $FeSO_4$* | $H_2O_2$ | Lime | Polymer D | Turbidity Filtered (NTU) | Colour Filtered (CU) |
|---|---|---|---|---|---|---|
| 50 | | | 2000 | 1 | 0.50 | 15 |
| 50 | | 20 | | | 0.37 | 11 |
| 50 | | | 2000 | 1 | 0.22 | 12 |
| 50 | 40 | | | | 0.56 | 33 |
| 50 | | | 2000 | 1 | 0.23 | 14 |
| 50 | 40 | 20 | | | 0.50 | 13 |
| 50 | | | 2000 | 1 | 0.15 | 10 |
| 50 | 40 | 20 | | | 0.12 | 5 |

* Expressed as $FeSO_4 \cdot 7H_2O$

Lime was used in this test as the plant used it to maintain the plant's target pH of 9.5. The addition of lime had a serious deleterious effect on the performance of the polymers.

TABLE 8

Supernatant, 0.45 micron filtered
Raw Well Water, Palm Beach, Florida

| Polymer C (ppm) | Turbidity Unfiltered (NTU) | Turbidity Filtered (NTU) | Colour Unfiltered (CU) | Colour Filtered (CU) |
|---|---|---|---|---|
| 8 | | 0.23 | | 14 |
| 5 | 9.1 | 0.22 | 228 | 8 |

Table 8 represents the results of using a preferred polymer alone.

TABLE 9

*Supernatant, 0.45 micron filtered*
*Raw Well Water, Palm Beach, Florida*

| Treatment Dosage (ppm) | Turbidity (NTU) | Colour (Cu) |
|---|---|---|
| Blanks | .18,.19,.23,.18,.19 | 34,25,25,28,28 |
| Alum (1) | .21 | 34 |
| Alum (5) | .23 | 37 |
| Alum (10) | .19 | 30 |
| Alum (20) | .18 | 22 |
| Alum (50) | .09 | 7 |
| Alum (75) | .13 | 1 |
| Alum (100) | .10 | 1 |
| Polymer B (5) | .51 | 17 |
| Polymer B (10) | .17 | 7 |
| Polymer B (15) | .22 | 14 |
| Polymer B (20) | 1.9 | 47 |
| Polymer B (30) | ---- | ---- |
| Polymer B (50) | .48 | 46 |
| Polymer B (100) | .79 | 45 |
| Polymer B (200) | .49 | 44 |
| Polymer C (5) | .22 | 8 |
| Polymer C (10) | .11 | 8 |
| Polymer C (15) | 1.0 | 51 |
| Polymer A (10) | .27 | 14 |
| Polymer A (15) | .13 | 13 |
| Polymer A (20) | .25 | 11 |
| Polymer A (50) | .14 | 5 |
| Polymer A (100) | .07 | 0 |
| Polymer B (10) + DK1036M (50) | .49 | 11 |
| Polymer B (10) + DK1036M (100) | .25 | 8 |
| Polymer B (10) + DK1036M (150) | .25 | 8 |
| Polymer B (10) + DK1036M (200) | .25 | 5 |
| Polymer B (10) + DK1036M (300) | .18 | 4 |

Table 9 represents the results when using the cationic polymers alone. It also represents a comparison with alum, a traditional flocculating agent.

TABLE 10

Supernatant, 0.45 micron filtered
Raw Well Water, Palm Beach, Florida

| Treatment Dosage (ppm) Polymer A | $FeSO_4$* | $H_2O_2$ | Turbidity (NTU) | Colour (CU) | TOX(ppb) |
|---|---|---|---|---|---|
| 0 | 0 | 0 | 0.24 +/- 0.03 | 33+/-5 | 449;737 |
| 10 | 0 | 0 | .20 | 20 | |
| 20 | 0 | 0 | .18 | 15 | |
| 50 | 0 | 0 | .56 | 17 | |
| 75 | 0 | 0 | .18 | 5;9 | |
| 5 | 40 | 20 | .15 | 12 | |
| 10 | 10 | 10 | .20 | 20 | |
| 10 | 40 | 20 | .21 | 11 | |
| 20 | 40 | 20 | .17 | 11 | |
| 50 | 0 | 20 | .37 | 11 | |
| 50 | 40 | 0 | .56 | 33 | |
| 50 | 10 | 10 | .10 | 5 | |
| 50 | 40 | 20 | .10; .14 | 5; 11 | |

* Expressed as $FeSO_4 \cdot 7H_2O$

Table 10 represents the results when using Polymer A in a composition of the present invention. Note the lessening of turbidity and color when all three species are used together.

TABLE 11

Supernatant, 0.45 micron filtered
Raw Well Water, Palm Beach, Florida

| Treatment Dosage (ppm) PVI | $FeSO_4$ | $H_2O_2$ | Turbidity(NTU) | Colour (CU) | TOX(ppb) |
|---|---|---|---|---|---|
| 5 | 0 | 0 | .22 | 31 | |
| 5 | 40 | 20 | .15 | 13 | |
| 10 | 40 | 20 | .15 | 12 | |
| 15 | 40 | 20 | .16 | 10 | |
| PVP | | | | | |
| 5 | 40 | 20 | .22 | 15 | |
| 10 | 40 | 20 | .25 | 16 | |
| PC8 | | | | | |
| 5 | 0 | 0 | .29 | 24 | |
| 10 | 0 | 0 | .65 | 25 | |
| 15 | 0 | 0 | 1.80 | 42 | |
| 20 | 0 | 0 | 2.7 | 41 | |
| 50 | 0 | 0 | 2.6 | 56 | |
| PTMAACl | | | | | |
| 5 | 0 | 0 | .76 | 25 | |
| 7 | 0 | 0 | .42 | 20 | |
| 18 | 0 | 0 | 3.7 | 37 | |
| Polymer C | | | | | |
| 8 | 0 | 0 | .23 | 14 | |

PVI = polyvinylimidazole
PVP = polyvinyl pyrolidone
PC8 = poly-EPI-DMA-octyl methylamine
PTMAACl = polytrimethylallylammonium chloride

* Expressed as $FeSO_4 \cdot 7H_2O$

Table 11 represents the results of other polymers when used in a composition of the present invention.

TABLE 12

Supernatant, 0.45 micron filtered
Raw Well Water, Palm Beach, Florida

| Treatment (Dosage ppm) | Turbidity(NTU) | Colour (CU) | TOX(ppb) |
|---|---|---|---|
| 1. (a) $FeSO_4 \cdot 7H_2O$ (40) + $H_2O_2$ (20) | | | |
| (b) Polymer B (8) | .15 | 10 | |
| 2. (a) Polymer A (50) | | | |
| (b) $FeSO_4 \cdot 7H_2O$ (40) + H2O2 (20) | .10 | 5 | 81 |
| 3. (a) $H_2O_2$ (20) | | | |
| (b) Polymer B (8) | .26 | 14 | |
| 4. (a) $FeSO_4 \cdot 7H_2O$ (40) | | | |
| (b) Polymer B (8) | 1.19 | 39 | |
| 5. (a) $FeSO_4 \cdot 7H_2O$ (4) + $H_2O_2$ (2) | | | |
| (b) Polymer B (8) | .34 | 15 | |
| 6. (a) Lime (2,000) + Polymer D | | | |
| (b) Polymer B (8) | .49 | 21 | |

* step (a) was mixed 2 minutes at 100 rpm, then step (b) treatment was added and mixed another 2 minutes at 100 rpm, 5 minutes at 35 rpm, and settled.

Table 12 represents the results when a two-step treatment was used.

TABLE 13

Supernatant, 0.45 micron filtered
Raw Well Water, Palm Beach, Florida

| Treatment (Dosage ppm) | Turbidity (NTU) | Colour (CU) | TOX (ppb) |
|---|---|---|---|
| 1. Lime (2,000) | .39 | 28 | |
| 2. Polymer B (10) + Lime (2,000) | .77 | 21 | |
| 3. Polymer A (75) + Lime (2,000) | .35 | 8 | 468 |
| 4. Polymer B (10) + $FeSO_4 \cdot 7H_2O$ (40) + $H_2O_2$ (20) + Lime (2,000) | .13 | 14 | |
| 5. Polymer A (20) + $FeSO_4 \cdot 7H_2O$ (40) + $H_2O_2$ (20) + Lime (2,000) | .17 | 15 | |
| 6. PVI (15) + $FeSO_4 \cdot 7H_2O$ (40) + $H_2O_2$ (20) + Lime (2,000) | .32 | 19 | |

Table 13 represents the results when lime is added to various components of the composition. The plant uses this lime to assure water pH of 9.5.

TABLE 14

Supernatant, 0.45 micron filtered
Raw Well Water, Palm Beach, Florida

| Treatment (Dosage ppm) | | Turbidity (NTU) | Colour (CU) | TOX (ppb) |
|---|---|---|---|---|
| 1. (a) | Polymer A (75) | 1.21 | 9 | |
| (b) | PVP (5) + $FeSO_4 \cdot 7H_2O$ (40) + $H_2O_2$ (20) | .30 | 5 | |
| 2. (a) | Polymer A (75) | | | |
| (b) | PVP (5) + $FeSO_4 \cdot 7H_2O$ (4) + $H_2O_2$ (2) | .33 | 7 | |
| 3. (a) | Polymer A (75) + PVP (5) | 1.0 | 11 | |
| (b) | $FeSO_4 \cdot 7H_2O$ (40) + $H_2O_2$ (20) | .31 | 5 | |
| 4. (a) | Polymer A (75) + Lime (2,000) + Polymer D (1) | .60 | 12 | |
| (b) | Polymer B (8) | .25 | 8 | 426 |
| 5. (a) | Polymer A (75) + DK1036M | | | |
| (b) | Lime (2,000) + Polymer D (1) | .20 | 6 | |
| (c) | Polymer B (2) | .17 | 6 | |

TABLE 14 (Cont'd)

Supernatant, 0.45 micron filtered
Raw Well Water, Palm Beach, Florida

| Treatment | | (Dosage ppm) | Turbidity (NTU) | Colour (CU) | TOX (ppb) |
|---|---|---|---|---|---|
| 6. | (a) | Polymer A (75) | | | |
| | (b) | Lime (2,000) + Polymer D (1) | .21 | 10 | |
| | (c) | Polymer B (2) + $FeSO_4 \cdot 7H_2O$ (4) + $H_2O_2$ (2) | .19 | 7 | 391 |
| 7. | | Polymer B (10) + DK1036M (200) | 3.8 | 39 | |
| 8. | | Polymer A (75) + DK1036M (200) | .18 | 5 | |
| 9. | (a) | Polymer A (75) + Lime (2,000) + Polymer D (1) | .25 | 11 | |
| | (b) | Polymer B (5) + $FeSO_4 \cdot 7H_2O$ (40) + $H_2O_2$ (20) | .31 | 5 | |

Each step represents 2 minutes at 100 rpm and 5 minutes at 35 rpm; only the final step in a given set was allowed to settle.

TABLE 15

Supernatant, 0.45 micron filtered
Raw Well Water, Palm Beach, Florida

| Treatment (Dosage ppm) | Turbidity (NTU) | Colour (CU) | TOX (ppb) |
|---|---|---|---|
| 1. Blank (no treatment) | .25 | 35 | 737 |
| 2. (a) Polymer A (50) | .56 | 17 | |
| (b) Lime (2,000) + Polymer D (1) | .50 | 15 | |
| 3. (a) Polymer A (50) + $H_2O_2$ (20) | .37 | 11 | |
| (b) Lime (2,000) + Polymer D (1) | .22 | 12 | |
| 4. (a) Polymer A (50) + $FeSO_4 \cdot 7H_2O$ (40) | .56 | 33 | |
| (b) Lime (2,000) + Polymer D (1) | .23 | 14 | |
| 5. (a) $FeSO_4 \cdot 7H_2O$ (40) + $H_2O_2$ (20) + Polymer A (50) | .50 | 13 | |
| (c) Lime (2,000) + Polymer D (1) | .15 | 10 | 25 |
| 6. (a) Lime (2,000) + Polymer D (1) | .29 | 28 | |
| (b) Polymer A (50) + $FeSO_4 \cdot 7H_2O$ (40) + $H_2O_2$ (20) | .12 | 5 | |

Step (a) was mixed 4 min at 100 rpm, 5 min at 35 rpm, settled 5 min, and supernatant decanted and analyzed; the supernatant from (a) was then used in step (b), using the same mixing cycle; in jar test #5 Polymer A was added in the first fast-mix cycle but two minutes after addition of the $FeSO_4 \cdot 7H_2O_2$.

Table 14 and 15 represent the results of various combinations used in a two step treatment.

## Claims

1. A composition for clarifying and reducing colour contamination in an aqueous system which comprises a (a) cationic polyelectrolyte, (b) ferrous salt and (c) hydrogen peroxide.

2. A composition according to claim 1, wherein (a) is an epichlorohydrin-amine polymer.

3. A composition according to claim 2, wherein the epichlorohydrin-amine polymer has the formula:

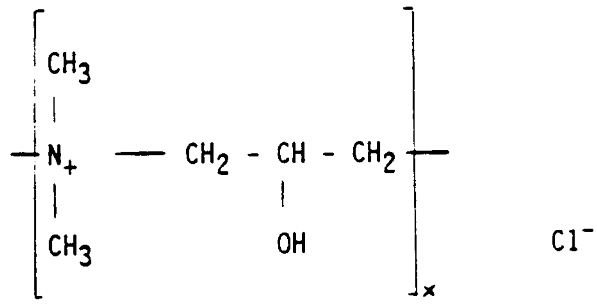

4. A composition according to claim 2 or 3, wherein the epichlorohydrin-amine polymer has a molecular weight of about 8,000 to about 14,000.

5. A composition according to claim 1, wherein (a) is a polydiallyldimethyl ammonium chloride (poly DADMAC) polymer.

6. A composition according to claim 5, wherein the poly DADMAC polymer has the formula:

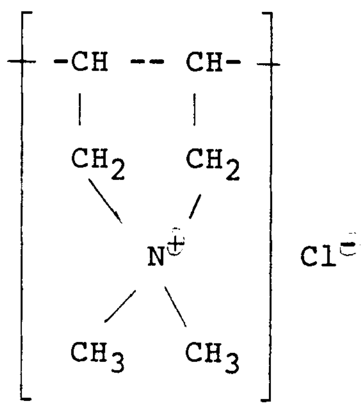

7. A composition according to claim 5 or 6, wherein the poly DADMAC polymer has a molecular weight of about 250 x $10^3$ to about 400 x $10^3$.

8. A composition according to claim 1, wherein (a) is a cross-linked melamine-formaldehyde polymer.

9. A composition according to claim 8, wherein the cross-linked melamine-formaldehyde polymer has the formula:

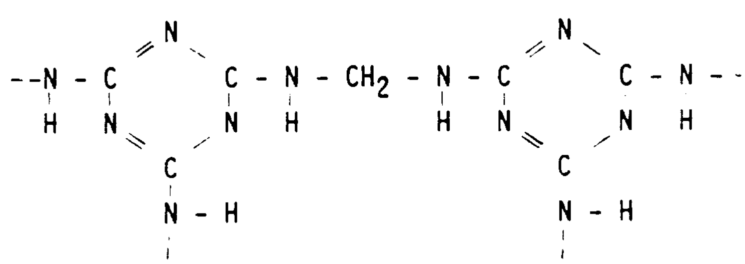

10. A composition according to claim 8 or 9, wherein the cross-linked melamine-formaldehyde polymer has

a molecular weight of about 25,000.

**11.** A composition according to any of claims 1 to 10, wherein (b) is ferrous sulphate.

**12.** A composition according to any of claims 1 to 11, wherein the concentration ratio of (a):(b):(c) is on a parts per million basis range of (5-50):(10-80):(10-50).

**13.** A method of clarifying and reducing colour contamination in an aqueous system suffering from suspended solids and organic contaminants comprising adding a combination of (a) cationic polyelectrolyte, (b) ferrous salt and (c) hydrogen peroxide.

**14.** A method of clarifying and reducing colour contamination in an aqueous system suffering from the growth of microorganisms comprising adding an effective amount for the purpose of (a) cationic polyelectrolyte, (b) ferrous salt and (c) hydrogen peroxide.

**15.** A method according to claim 13 or 14, wherein (a) is as defined in any of claims 2 to 4.

**16.** A method according to claim 13 or 14, wherein (a) is as defined in any of claims 5 to 7.

**17.** A method according to claim 13 or 14, wherein (a) is as defined in any of claims 8 to 10.

**18.** A method according to any of claims 13 to 17, wherein (b) is ferrous sulphate.

**19.** A method according to any of claims 13 to 18, wherein the concentration ratio of (a) : (b) : (c) is on a parts per million basis range of (5-50):(10-80):(10-50).

**20.** A method according to any of claims 13 to 19, wherein the aqueous system is a municipal water system.

European Patent Office

# EUROPEAN SEARCH REPORT

Application Number

EP 91 31 2108

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WORLD PATENTS INDEX<br>Week 7949,<br>Derwent Publications Ltd., London, GB;<br>AN 79-88476B<br>& JP-A-54 139 258 (NIPPON PEROXIDE) 29 October 1979<br>* abstract *<br>--- | 1,11,13,<br>18 | C02F1/72<br>C02F1/54 |
| X | EP-A-0 371 187 (GELSENWASSER AG)<br><br>* page 4; claims 1,5 *<br>* page 2, line 5 - page 3, line 10 *<br>* page 3, line 55 - page 4, line 2 *<br>--- | 1,11,13,<br>18,20 | |
| X | WORLD PATENTS INDEX<br>Week 7920,<br>Derwent Publications Ltd., London, GB;<br>AN 79-37901B<br>& JP-A-54 044 353 (GUNZE K.K.) 7 April 1979<br>* abstract *<br>--- | 1,11,13,<br>18 | |
| | | | TECHNICAL FIELDS SEARCHED (Int. Cl.5 ) |
| D,A | US-A-4 765 923 (BETZ LABORATORIES)<br>* column 9; claims 1,4 *<br>* column 3, line 1 - line 10 *<br>* column 6, line 16 - line 34 *<br>--- | 1-7 | C02F |
| A | EP-A-0 083 522 (SOCIETE FRANCAISE HOECHST)<br>* page 16; claims 1,7-11 *<br>----- | 1,8-10 | |

The present search report has been drawn up for all claims

| Place of search | Date of completion of the search | Examiner |
|---|---|---|
| THE HAGUE | 09 APRIL 1992 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)